# EUROPÄISCHE PATENTANMELDUNG

(11) **EP 1 894 797 A2**
(43) Veröffentlichungstag der Anmeldung: **05.03.2008**
(21) Anmeldenummer: 07108892.6
(22) Anmeldetag: 24.05.2007
(51) Int. Cl.: B60S 3/04, B60S 3/06

(54) **Fahrzeugwaschanlage und Verfahren zur Konturerfassung eines in einer Fahrzeugwaschanlage zu waschenden Fahrzeugs**

(30) Priorität: 30.08.2006 DE 102006040610
(71) Anmelder: WashTec Holding GmbH, 86153 Augsburg (DE)
(72) Erfinder: Auer, Robert, 86391 Stadtbergen (DE)
(74) Vertreter: Rapp, Bertram

(57) **Zusammenfassung**

Die Erfindung betrifft ein Verfahren zur Konturerfassung eines in einer Fahrzeugwaschanlage zu waschenden Fahrzeugs (2), wobei mindestens eine Behandlungseinrichtung (1) und das Fahrzeug (2) in Waschrichtung (L) relativ zueinander bewegt werden, die Kontur mindestens einer Fahrzeugoberfläche optisch erfasst und Wasch- und/oder Behandlungsmedium auf diese Fahrzeugoberfläche aufgebracht wird. Weiter betrifft die Erfindung eine Fahrzeugwaschanlage, in der mindestens eine Behandlungseinrichtung (1) und ein zu waschendes Fahrzeug in Waschrichtung (L) relativ zueinander bewegbar sind, mit einer optischen Erfassungsvorrichtung (9 bis 14) zur Erfassung der Kontur mindestens einer Fahrzeugoberfläche und einer Sprühvorrichtung (15, 16) zum Aufbringen von Behandlungsmedium auf dieser Fahrzeugoberfläche. Bei den bekannten Verfahren und Fahrzeugwaschanlagen ist nachteilig, dass der Wasch- bzw. Behandlungsvorgang des Fahrzeugs erst zeitlich verzögert nach der Konturerfassung erfolgen kann.

Die Aufgabe, eine schnelle und zuverlässige Erfassung der Kontur eines zu waschenden Fahrzeugs in einer Fahrzeugwaschanlage zu ermöglichen, wird dadurch gelöst, dass das Aufbringen des Behandlungsmediums während oder vor der Konturerfassung erfolgt und die Fahrzeugwaschanlage hierzu eingerichtet ist.

## Beschreibung

Die Erfindung betrifft ein Verfahren zur Konturerfassung eines in einer Fahrzeugwaschanlage zu waschenden Fahrzeugs nach dem Oberbegriff des Anspruchs 1 sowie eine Fahrzeugwaschanlage nach dem Oberbegriff des Anspruchs 10.

Bei Fahrzeugwaschanlagen besteht der Wunsch, die Oberflächenstruktur des zu waschenden Fahrzeugs möglichst gut zu erfassen, um Behandlungseinrichtungen wie die rotierenden Waschbürsten eines verfahrbaren Waschportals oder einer Durchfahrwaschanlage möglichst nahe an die Fahrzeugoberflächen heranführen zu können, ohne das Fahrzeug oder daran angebrachte Zubehörteile zu beschädigen.

Bei bekannten Fahrzeugwaschanlagen werden hierzu üblicherweise Lichtschranken verwendet, die seitlich oder oberhalb des Fahrzeugs an der Fahrzeugwaschanlage angebracht sind und die Höhenkontur des Fahrzeugs erfassen. So offenbart beispielsweise die DE 32 08 527 C2 eine vor der ersten Arbeitsstation der Waschanlage befindliche Abtasteinrichtung, die aus mehreren senkrecht übereinander oder matrixartig angeordneten Lichtschranken besteht und hierdurch die Höhenkontur des Fahrzeugs ermittelt. Bei der Portalwaschanlage der DE 38 25 346 A1 ist eine aus senkrecht übereinander angeordneten Lichtschranken bestehende Höhenkontur-Erfassung vorgesehen, die direkt am verfahrenden Portal angeordnet ist. Zusätzlich ist dort an der vertikal verfahrbaren Trocknungsdüse eine Lichtschrankenanordnung angeordnet, die den Abstand der Trocknungsdüse vom Fahrzeugdach erfasst und steuert. Die DE 44 17 864 C2 offenbart eine Lichtschrankenanordnung, wobei dort nicht die Höhenkontur des Fahrzeugs erfasst wird, sondern zwei Lichtschranken vertikal und auf den Seiten des Fahrzeugs angeordnet sind, um die Seitenkontur des Fahrzeugs zu erfassen und die seitlichen Behandlungsaggregate anzusteuern.

Diesen bekannten Vorrichtungen zur Konturerfassung von Fahrzeugwaschanlagen ist gemein, dass die Konturerfassung jeweils zeitlich bzw. auch örtlich vor dem Wasch- bzw. Behandlungsvorgang des Fahrzeugs erfolgt. Diese Vorgehensweise basiert vor allem auf der seit langem bestehenden und gefestigten Meinung der Fachkreise, dass durch die von den in Betrieb befindlichen Behandlungseinrichtungen versprühten Schmutz- oder Wasserpartikel und die hierdurch erzeugte dunsthaltige Atmosphäre in der Waschanlage die Konturerfassung, insbesondere mit optischen Sensoren, verschlechtert bzw. verunmöglicht wird. So wird in der DE 32 08 527 C2 also besonderer Vorteil der dortigen Erfindung angesehen, dass die Abtasteinrichtung außerhalb der Zone liegt, in der durch die Spritzdüsen, Bürsten und Gebläse Schmutz- bzw. Wasserpartikel herumgeschleudert werden. Die dortige Lösung erhöht den Platzbedarf der Fahrzeugwaschanlage in Längsrichtung erheblich. Bei der DE 44 17 864 C2 wird obige Vorgehensweise dadurch ermöglicht, dass die Abtastvorrichtungen in Form von Lichtschranken räumlich vor dem Behandlungsaggregat angeordnet sind. Hierdurch wird die Ausdehnung des Behandlungsaggregats in Längsrichtung vergrößert und die freie Anordnung der Behandlungsaggregate an der Fahrzeugwaschanlage eingeschränkt. Muss zur Konturerfassung ein mehrmaliges Überfahren des Fahrzeugs erfolgen, so kann das Fahrzeug während dieser Zeit nicht gewaschen oder anderweitig behandelt werden.

Nachteil der bekannten Vorrichtungen und Verfahren zur Konturerfassung von Fahrzeugen in Fahrzeugwaschanlagen ist folglich, dass der Wasch- bzw. Behandlungsvorgang des Fahrzeugs erst zeitlich verzögert nach der Konturerfassung erfolgen kann.

Aufgabe der vorliegenden Erfindung ist es deshalb, ein Verfahren zur Konturerfassung eines in einer Fahrzeugwaschanlage zu waschenden Fahrzeugs und eine Fahrzeugwaschanlage der eingangs genannten Art bereitzustellen, welche die oben genannten Nachteile überwinden und eine schnelle und zuverlässige Erfassung der Kontur eines zu waschenden Fahrzeugs in einer Fahrzeugwaschanlage ermöglichen.

Diese Aufgabe wird durch ein Verfahren zur Konturerfassung eines in einer Fahrzeugwaschanlage zu waschenden Fahrzeugs mit den Merkmalen des Anspruchs 1 und eine Fahrzeugwaschanlage mit den Merkmalen des Anspruchs 10 gelöst. Vorteilhafte Ausgestaltungen und zweckmäßige Weiterbildungen der Erfindung sind in den Unteransprüchen angegeben.

Vorliegend ist zu berücksichtigen, dass optische Erfassbarkeit im Sinne der Erfindung nicht nur den Wellenlängenbereich des sichtbaren Lichts, sondern auch die daran angrenzenden Wellenlängenbereich einschließt, beispielsweise den Bereich des ultravioletten Lichts oder des infraroten Lichts.

Das eingangs genannte Verfahren und die eingangs genannte Fahrzeugwaschanlage zeichnen sich dadurch aus, dass das Behandlungsmedium während oder vor der Konturerfassung aufgebracht wird. Hierdurch wird die optische Erfassbarkeit der mit Behandlungsmedium versehenen Fahrzeugoberfläche für die Konturerfassung verbessert. Ein weiterer Vorteil der Erfindung liegt darin, dass der Wasch- bzw. Behandlungsvorgang des Fahrzeugs zeitgleich, also schon während der Konturerfassung des Fahrzeugs durchgeführt werden kann. So kann die Aufenthaltsdauer eines Fahrzeugs in der Fahrzeugwaschanlage verringert und folglich der Fahrzeugdurchsatz der Fahrzeugwaschanlage erhöht werden, was zu einer höheren Wirtschaftlichkeit der Fahrzeugwaschanlage führt. Zudem kann die Konturerfassung besser voreingestellt und justiert werden, so dass die Konturerfassung unabhängig von der Fahrzeugfarbe stets gleichbleibend gute Ergebnisse erzielt. Dies ist besonders vorteilhaft bei in unterschiedlichen Farben lackierten Fahrzeugen oder wenn am Fahrzeug vorhandene oder zusätzlich befestigte Komponenten wie Stoßstangen, Dachboxen, Skiboxen, Dachgepäckträger etc. eine andere Farbe als das Fahrzeug aufweisen.

Bei einer Ausführung der Erfindung wird als Behandlungsmedium Schaum, insbesondere weißer Schaum verwendet. Dies ist vor allem dann besonders vorteilhaft, wenn zum Reinigen oder Einweichen der verschmutzten Fahrzeugoberflächen ohnehin Schaum auf die Fahrzeugoberflächen aufgebracht werden muss, da somit keine zusätzlichen Vorkehrungen für die Behandlung des Behandlungsmediums zur Verbesserung der optischen Erfassbarkeit der Fahrzeugoberflächen getroffen werden müssen. Ebenso kann die optische Erfassbarkeit der Fahrzeugoberflächen verbessert werden, wenn dem Behandlungsmedium vor dem Aufbringen auf die Fahrzeugoberfläche ein Kontrastverstärkungsmittel und/oder Reflexionsverstärkungsmittel beigefügt wird, beispielsweise bevorzugt helle Farbe. Hierdurch können die für die Erfassungsvorrichtung günstigen optischen Eigenschaften eingestellt werden. Dies ist besonders vorteilhaft bei in unterschiedlichen Farben lackierten Fahrzeugen oder wenn am Fahrzeug vorhandene oder zusätzlich befestigte Komponenten wie Stoßstangen, Dachboxen, Skiboxen, Dachgepäckträger etc. eine andere Farbe als das Fahrzeug aufweisen.

Auch kann zur optischen Erfassung nach einer weiteren Ausführung der Erfindung ultraviolettes Licht verwendet werden, so dass eine auf diesen Wellenlängenbereich angepasste Konturerfassung ohne Beeinträchtigung durch Licht anderer Wellenlängenbereiche erfolgen kann. Hierbei kann besonders vorteilhaft das Behandlungsmedium, das Kontrastverstärkungsmittel und/oder das Reflexionsverstärkungsmittel fluoreszierend und durch ultraviolettes Licht in Form von sog. Schwarzlicht anregbar sein. Hierdurch kann besonders vorteilhaft in geschlossenen Waschanlagen die Konturerfassung verbessert werden.

Wird in einer vorteilhaften Ausführung der Erfindung die Konturerfassung mittels eines Lichtschnittverfahrens, insbesondere eines Laser-Lichtschnittverfahrens, durchgeführt, so kann durch die geeignete Wahl der Farbe des Behandlungsmediums oder Auswahl geeigneter Kontrastverstärkungsmittel und/oder Reflexionsverstärkungsmittel die Erfassbarkeit der Fahrzeugkontur noch weiter verbessert werden. Insbesondere wenn beim Lichtschnittverfahren an die Wellenlänge des verwendeten Lichts angepasste Filter verwendet werden, kann durch Anpassung des Behandlungsmediums, des Kontrastverstärkungsmittel und/oder des Reflexionsverstärkungsmittel an die Wellenlänge des verwendeten Lichts die optische Erfassbarkeit der Fahrzeugoberflächen noch erhöht werden. Es könne aber auch Filter für andere Beleuchtungsarten und -strahlen verwendet werden, um die Konturerfassung zu verbessern.

Weitere Besonderheiten und Vorzüge der Erfindung ergeben sich aus der folgenden Beschreibung von bevorzugten Ausführungsbeispielen anhand der Zeichnungen. Es zeigen:
- **Fig. 1**: eine schematische Ansicht eines verfahrbaren Portals einer Portalwaschanlage mit einem zu waschenden Fahrzeug von der Seite;

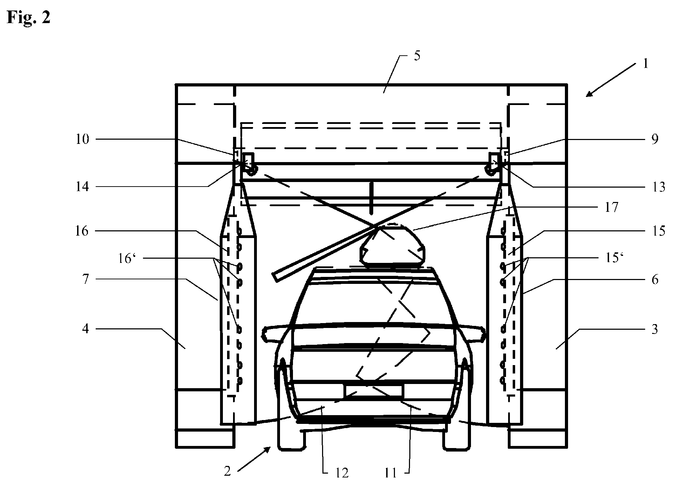

- **Fig. 2**: eine schematische Ansicht des Portals aus Fig. 1 von vorne;
- **Fig. 3**: eine schematische perspektivische Ansicht des Portals aus Fig. 1.

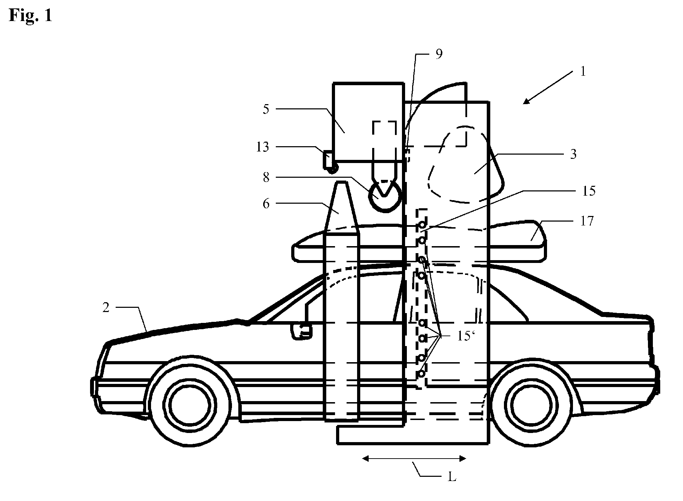

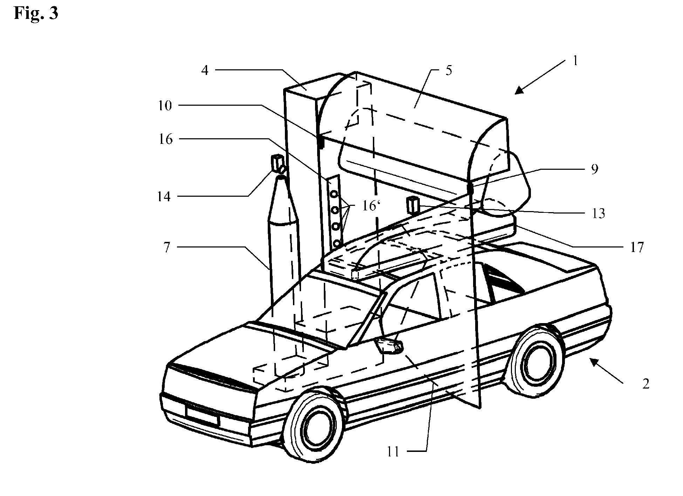

Die Fig. 1 und 3 zeigen eine schematische Ansicht einer an sich bekannten Portalwaschanlage mit einer als Waschportal 1 ausgebildeten Behandlungseinrichtung und einem eingestelltem zu waschenden Fahrzeug 2. Das Waschportal 1 weist zwei vertikale, in Wasch- bzw. Längsrichtung L des Fahrzeugs 2 verfahrbare Portalsäulen 3 und 4 und eine quer zur Längsrichtung L verlaufenden Traverse 5 auf, welche die Portalsäulen 3 und 4 verbindet. An der Traverse 5 sind um senkrecht Achsen drehbare Waschbürsten 6 und 7 angeordnet, die zum Waschen der Seitenflächen und der Vorder- und Rückseite des Fahrzeugs 2 an der Traverse 5 quer zur Längsrichtung L bewegbar sind. Eine horizontal über dem Fahrzeugdach verlaufende Waschbürste 8 ist in den Zeichnungen nur angedeutet.

Um die Kontur des Fahrzeugs 2 erfassen zu können, wird als optische Erfassungsvorrichtung zur Erfassung der Kontur des Fahrzeugs ein an sich bekanntes Lichtschnittverfahren verwendet. An der in Fig. 1 rechten unteren Kante der Traverse 5 und auf der Innenseiten der Portalsäulen 3 und 4 angebrachte Laserlinienprojektoren 9 und 10 erzeugen Lichtfächer 11 bzw. 12, die von an den seitlichen Enden der Traverse 5 angebrachten CCD-Kameras 13 und 14 erfasst werden können. Die Kameras 13 und 14 sind mit an die Wellenlänge der Laser angepassten Filtern versehen, die störende äußere Lichteinflüsse unterdrücken und die Konturerfassung verbessern sollen. Sowohl die Laserlinienprojektoren 9 und 10 als auch die Kameras 13 und 14 werden von einer nicht zeichnerisch dargestellten Steuereinheit 20 der Fahrzeugwaschanlage angesteuert und/oder ausgelesen.

Um das zu waschende Fahrzeug 2 mit Behandlungsmedium besprühen zu können, sind an den zum Fahrzeug 2 weisenden Innenseiten der Portalsäulen 3 und 4 Sprühvorrichtungen in Form von senkrecht verlaufenden Sprühbalken 15 und 16 mit einer Vielzahl von Sprühdüsen 15' bzw. 16' vorgesehen. Zusätzlich können an der Traverse 5 weitere Sprüheinrichtungen vorgesehen sein, die das Behandlungsmedium zusätzlich von oben auf die Fahrzeugoberfläche aufbringen. Die Sprühbalken 15 und 16 werden ebenfalls von der Steuereinheit 20 angesteuert. Als Behandlungsmedium wird vorliegend weißer Waschschaum verwendet, es kann aber gleichfalls Einweichschaum, Wasser oder Wachs eingesetzt werden.

Im folgenden wird nun ein Waschvorgang mit gleichzeitiger Konturerfassung eines dunkelgrün gefärbten Fahrzeugs 2 erläutert. Die Steuereinheit 20 lässt das Waschportal 1 von vorne, also in Fig. 1 von links, an das stillstehende, zu waschende Fahrzeug 2 heranfahren. Hierbei wird durch die Sprühbalken 15 und 16 Behandlungsmedium in Form von weißem Schaum auf die Fahrzeugoberfläche aufgesprüht. Dieser Schaum dient einerseits zum Einweichen des auf der Fahrzeugoberfläche angetrockneten Schmutzes, gleichzeitig dient er aber auch als Kontrastverstärkungsmittel für die Konturerfassung. Während des Aufbringens des Schaums erzeugen die Laserlinienprojektoren 9 und 10 Lichtfächer 11 bzw. 12 im Bereich roten Lichts, wobei deren Verlauf auf der Fahrzeugoberfläche bzw. dem darauf befindlichen weißen Schaum von den Kameras 13 und 14 erfasst wird. Da sich der Schaum flächig auf den Fahrzeugoberflächen verteilt, wird der Kontrast und die Reflexionsfähigkeit der Fahrzeugoberflächen erhöht, so dass die Fahrzeugkontur mit ausreichender Genauigkeit erfasst werden kann.

Eine auf dem Fahrzeug 2 montierte Aluminium-Dachbox 17 weist eine aluminiumfarbene Oberfläche auf. Da auch die Dachbox 17 mit weißem Schaum besprüht wird, wird der Kontrast und die Reflexionfähigkeit der Dachbox 17 an die der besprühten Fahrzeugoberflächen angepasst, so dass eine einheitliche und gleichmäßige Erfassung der Fahrzeugkontur erfolgen kann.

Die Erfindung ist nicht auf die hier gezeigten Ausführungen beschränkt. So kann die Konturerfassung gleichermaßen bei Durchfahrwaschanlagen eingesetzt werden, bei denen die Behandlungseinrichtungen im wesentlichen ortsfest montiert sind und das Fahrzeug durch die Waschanlage transportiert oder gefahren wird, wobei die Erfassung dann vorteilhaft an der ersten Behandlungsstation zusammen mit dem ersten Wasch- bzw. Behandlungsvorgang erfolgt. Ebenso kann es sich bei den Behandlungseinrichtungen auch um Hochdruckreinigungsvorrichtungen ohne rotierende Waschbürsten handeln.

## Patentansprüche

1. Verfahren zur Konturerfassung eines in einer Fahrzeugwaschanlage zu waschenden Fahrzeugs (2), wobei mindestens eine Behandlungseinrichtung (1) und das Fahrzeug (2) in Waschrichtung (L) relativ zueinander bewegt werden, die Kontur mindestens einer Fahrzeugoberfläche optisch erfasst und Wasch- und/oder Behandlungsmedium auf diese Fahrzeugoberfläche aufgebracht wird, **dadurch gekennzeichnet, dass** das Aufbringen des Behandlungsmediums während oder vor der Konturerfassung erfolgt, um die optische Erfassbarkeit der Fahrzeugoberfläche für die Konturerfassung zu verbessern.

2. Verfahren nach Anspruch 1, **dadurch gekennzeichnet, dass** das Behandlungsmedium Schaum, insbesondere weißer Schaum ist.

3. Verfahren nach Anspruch 1 oder 2, **dadurch gekennzeichnet, dass** dem Behandlungsmedium vor dem Aufbringen auf die Fahrzeugoberfläche ein Kontrastverstärkungsmittel und/oder Reflexionsverstärkungsmittel beigefügt wird.

4. Verfahren nach einem der vorangehenden Ansprüche, **dadurch gekennzeichnet, dass** das Behandlungsmedium, das Kontrastverstärkungsmittel und/oder das Reflexionsverstärkungsmittel Farbe ist.

5. Verfahren nach einem der vorangehenden Ansprüche, **dadurch gekennzeichnet, dass** das Behandlungsmedium, das Kontrastverstärkungsmittel und/oder das Reflexionsverstärkungsmittel fluoreszierend ist.

6. Verfahren nach einem der vorangehenden Ansprüche, **dadurch gekennzeichnet, dass** das Behandlungsmedium, das Kontrastverstärkungsmittel und/oder das Reflexionsverstärkungsmittel durch ultraviolettes Licht angeregt werden kann.

7. Verfahren nach einem der vorangehenden Ansprüche, **dadurch gekennzeichnet, dass** die optische Konturerfassung auch im Wellenlängenbereich des ultravioletten Lichts erfolgt.

8. Verfahren nach einem der vorangehenden Ansprüche, **dadurch gekennzeichnet, dass** die Kontur der mindestens einen Fahrzeugoberfläche mittels eines Lichtschnittverfahrens, insbesondere eines Laser-Lichtschnittverfahrens, erfasst wird.

9. Verfahren nach Anspruch 8, **dadurch gekennzeichnet, dass** beim Lichtschnittverfahren an die Wellenlänge des verwendeten Lichts angepasste Filter verwendet werden, wobei das Behandlungsmedium, das Kontrastverstärkungsmittel und/oder das Reflexionsverstärkungsmittel ebenfalls an die Wellenlänge des verwendeten Lichts angepasst wird und/oder werden.

10. Fahrzeugwaschanlage, in der mindestens eine Behandlungseinrichtung (1) und ein zu waschendes Fahrzeug in Waschrichtung (L) relativ zueinander bewegbar sind, mit einer optischen Erfassungsvorrichtung (9 bis 14) zur Erfassung der Kontur mindestens einer Fahrzeugoberfläche und einer Sprühvorrichtung (15, 16) zum Aufbringen von Behandlungsmedium auf dieser Fahrzeugoberfläche, **dadurch gekennzeichnet, dass** die Sprühvorrichtung (15, 16) zum Aufbringen des Behandlungsmediums auf diese Fahrzeugoberflächen während oder vor der Konturerfassung durch die Erfassungsvorrichtung (9 bis 14) eingerichtet ist, um durch das auf diese Fahrzeugoberfläche aufgebrachte Behandlungsmedium die optische Erfassbarkeit der Fahrzeugoberfläche für die Konturerfassung zu verbessern.

11. Vorrichtung nach Anspruch 10, **dadurch gekennzeichnet, dass** das Behandlungsmedium Schaum, insbesondere weißer Schaum ist.

12. Vorrichtung nach einem der Ansprüche 10 bis 11, **dadurch gekennzeichnet, dass** das Behandlungsmedium, das Kontrastverstärkungsmittel und/oder das Reflexionsverstärkungsmittel Farbe ist.

13. Vorrichtung nach einem der Ansprüche 10 bis 12, **dadurch gekennzeichnet, dass** das Behandlungsmedium, das Kontrastverstärkungsmittel und/oder das Reflexionsverstärkungsmittel fluoreszierend ist.

14. Vorrichtung nach einem der Ansprüche 10 bis 13, **dadurch gekennzeichnet, dass** das Behandlungsmedium, das Kontrastverstärkungsmittel und/oder das Reflexionsverstärkungsmittel durch ultraviolettes Licht angeregt werden kann.

15. Vorrichtung nach einem der Ansprüche 10 bis 14, **dadurch gekennzeichnet, dass** die optische Erfassungsvorrichtung zum Abstrahlen von ultravioletten Licht eingerichtet ist.

16. Vorrichtung nach einem der Ansprüche 10 bis 15, **dadurch gekennzeichnet, dass** die Erfassungsvorrichtung Lichtfächer (11, 12) erzeugende Lichtprojektoren, insbesondere Laserlinienprojektoren (9, 10), aufweist.

17. Vorrichtung nach einem der Ansprüche 10 bis 16, **dadurch gekennzeichnet, dass** die Erfassungsvorrichtung lichtempfindliche Kameras (13, 14), insbesondere CCD-Kameras, aufweist.

18. Vorrichtung nach Anspruch 17, **dadurch gekennzeichnet, dass** den Kameras (13, 14) auf die Wellenlänge der Lichtfächer (11, 12), insbesondere die Wellenlänge der Laserstrahlen, angepasste Filter vorgeschaltet sind.

19. Vorrichtung nach Anspruch 18, **dadurch gekennzeichnet, dass** das Behandlungsmedium, das Kontrastverstärkungsmittel und/oder das Reflexionsverstärkungsmittel an die Wellenlänge der Lichtfächer angepasst ist und/oder sind.
